# EUROPÄISCHE PATENTSCHRIFT

(11) **EP 2 093 122 B1**
(45) Veröffentlichungstag und Bekanntmachung des Hinweises auf die Patenterteilung: **20.06.2012**
(21) Anmeldenummer: 09002422.5
(22) Anmeldetag: 20.02.2009
(51) Int. Cl.: B61G 5/10

(54) **Eindeutige und automatische Kopplung von genau einem WLAN Client an einen WLAN Accesspoint für die Zugwagenkopplung**
Direct and automatic coupling of exactly one WLAN client to one WLAN access point for coach coupling
Couplage net et automatique d'exactement un client WLAN à un point d'accès WLAN pour le couplage de wagons de trains

(30) Priorität: 20.02.2008 DE 102008010218
(43) Veröffentlichungstag der Anmeldung: 26.08.2009
(73) Patentinhaber: Hirschmann Automation and Control GmbH, 72654 Neckartenzlingen (DE)
(72) Erfinder: Sommer, Rolf-Dieter, 73760 Ostfildern (DE)
(74) Vertreter: Greif, Thomas

(56) Entgegenhaltungen:
- WO-A-2005/105536
- WO-A-2007/008756
- WO-A-2007/055866
- DE-A1-102004 037 849
- US-A- 5 351 919

## Beschreibung

Die Erfindung betrifft eine eindeutige und automatische Kopplung von genau einem WLAN Client an einen WLAN Accesspoint für die Zugwagenkopplung gemäß den Merkmalen des Oberbegriffes des Patentanspruches 1.

WLAN Accesspoints ("Hot spots") sind in Verbindung mit ihren Antennen so ausgelegt, dass mehrere Accesspoints von Anwendern ("client"), die sich in ihrem Funkfeld befinden, sich mit ihnen verbinden können. Die Auslegung der Antennen ist darauf optimiert, Verbindungen zu beweglichen Teilnehmern herzustellen. Das wird z.B. durch Methoden wie Antennendiversity angestrebt. Jeder beliebige Anwender kann sich, die entsprechenden Rechte vorausgesetzt, in einen WLAN Accesspoint einwählen, mit ihm verbinden und in unidirektional oder bidirektional Daten austauschen.

Für Züge werden einzelne Wagen und Lokomotiven oder auch zunächst autarke Züge zu einem einzigen Zug gekoppelt. Im fertig gekoppelten Zug soll ein durchgehendes Datennetz zur Verfügung stehen, das unabhängig von anderen Datenverbindungen automatisch bei der Zusammenführung der Wagen aufgebaut wird. Bisher werden entweder zusätzliche Kabel oder andere zusätzliche Datenübertragungsmethoden benutzt, um die Einrichtungen zum Senden und Empfangen sowie zum Verarbeiten von Daten in den zu koppelnden Zugwagen paarweise zu verbinden.

Der Erfindung liegt die Aufgabe zu Grunde, automatisch und ohne Nutzung eines zusätzlichen Übertragungsweges eine eindeutige paarweise Verbindung zwischen gegenüberstehenden Wagenenden verschiedener Zugwagen aufzubauen. Insbesondere muss verhindert werden, dass baugleiche und gleich konfigurierte Einrichtungen zum Senden und Empfangen sowie zum Verarbeiten von Daten in der näheren Umgebung, wie zum Beispiel Zugwagen auf dem Nachbargleis, fälschlicherweise verbunden werden.

Aus der DE 10 2004 037 849 A1 ist ein Verfahren zur Kopplung von zwei Zugwagen untereinander zwecks Datenaustausch zwischen diesen beiden Zugwagen bekannt, wobei in jedem Zugwagen Sende-/Empfangseinrichtungen vorhanden sind, die über Signalleitungen mit jeweils einer eigenen HF-Einrichtung verbunden sind, wobei die HF-Einrichtung in einer Zugkupplung des Zugwagens angeordnet ist. Die paarweise Kopplung der beiden HF-Einrichtungen erfolgt dann, wenn die beiden Zugkupplungen der beiden zu koppeinden Wagen miteinander verbunden sind.

Aus der US 5,351,919 ist ein Verfahren zur Kopplung von zwei Fahrzeugen untereinander zwecks Datenaustauschs zwischen diesen beiden Fahrzeugen bekennt, wobei in jedern der beiden Fahrzeugen Einrichtungen zum Senden und Empfangen sowie zum Verarbeiten von Daten vorhanden sind.

Diese Aufgabe ist durch die Merkmale des Patentanspruches 1 gelöst.

Erfindungsgemäß ist vorgesehen, dass die Datenübertragung zwischen den beiden gekoppelten Zugwagen drahtlos und beim Senden ausgerichtet erfolgt, wobei die Strahlrichtungen räumlich so gewählt werden, dass die gleichzeitige Verbindung nur in einer bestimmten räumlichen Position der paarweise zu koppelnden Zugwagen und deren Einrichtungen zum Senden und Empfangen von Daten besteht.

Bei der geforderten eindeutigen Wagenkopplung sind die Ziele anders als bei der eindeutigen drahtgebundenen Zugwagenkopplung. Es ist nur eine einzige Verbindung von einem Zugwagen zu dem gekoppelten Zugwagen zulässig. Dies wird bei der eindeutigen drahtgebundenen Zugwagenkopplung dadurch erreicht, dass der eine Zugwagen eben nur mit dem ihm zugekoppelten Zugwagen über die Verbidungsleitung und deren Steckverbindung elektrisch zwecks Datenübertragung verbunden werden kann, da die elektrische Zuleitung nur die erforderlich Länge hat und bis zum gekoppelten Zugwagen auf dem gleichen Gleis reicht. Bei der drahtlosen Zugwagenkopplung zwecks Datenübertragung besteht jedoch die Gefahr, dass zum Beispiel zwei Zugwagen drahtlos miteinander kommunizieren, die nicht miteinander gekoppelt werden sollen, weil sie auf unterschiedlichen Gleisen stehen.

Die Verbindungen zwischen den Wagen müssen zwecks Vereinfachung der Handhabung der Zugwagenkopplung drahtlos sein. Dabei ist es notwendig, dass die Datenverbindungen zwischen den Wagen eindeutig aufgebaut werden. Datenverbindungen sind zum Beispiel Ethernetverbindungen über WLAN Komponenten. Die Verbindung besteht zwischen WLAN Accesspoints und WLAN Clients. Die eindeutige Verbindung zwischen zwei zu koppelnden Zugwagen ist besonders schwierig zu erreichen, weil bei Hochfrequenzverbindungen immer mit Reflexionen der übertragenen elektromagnetischen Wellen zu rechnen ist, insbesondere wenn leitfähige Gegenstände im Strahlungsfeld sind. Diese Problematik wird mit der erfindungsgemäßen Lösung beseitigt.

In Weiterbildungen der Erfindung bestehen nun mehrere Lösungen, die die gestellte Aufgabe für sich alleine betrachtet oder in Kobination miteinander lösen, wodurch eine paarweise und eindeutige Verbindung durch die Verbindung mehrerer Methoden erreicht wird.

### 1. Hochfrequenztechnische Auslegung der WLAN Komponenten:

In Weiterbildung der Erfindung ist vorgesehen, dass die Datenübertragung in zumindest zwei Frequenzbereichen erfolgt, wobei bei einem Kopplungsvorgang zweier Zugwagen durch einen Wechsel des Frequenzbereiches bestätigt werden kann, ob sich bei den zumindest beiden Frequenzbereichen dieselbe Paarung der verwendeten Zugwagen ergibt.

Das Fehlkopplungsrisiko ist durch die hochfrequenztechnisch mögliche Verbindung zu einem Wagen auf dem Nachbargleis gegeben. Richtantennen können das Risiko senken, aber die oben genannten Reflexionen begrenzen hier im positiven Sinne die Wirkung der Richtantenne. WLAN Komponenten benutzen als Übertragungsfrequenzen Bereiche bei 2,4 GHz und bei 5 GHz. Da die unerwünschten Reflexionen in beiden Frequenzbereichen unterschiedlich sind, kann beim Kopplungsvorgang durch einen Wechsel des Frequenzbereiches verifiziert werden, ob sich bei beiden Frequenzbereichen dieselbe Paarung ergibt. Es ist unwahrscheinlich, dass störende Reflexionen auf beiden Frequenzen eine ausreichende Verbindungsqualität zu einer WLAN Komponente auf dem Nachbargleis bewirken. Durch die Nutzung beider Frequenzbereiche kann das Fehlkopplungsrisiko gesenkt werden.

### 2. Trennung von Sende- und Empfangsantennen:

In Weiterbildung der Erfindung ist vorgesehen, dass eine Verbindung vom Sendeteil einer Einrichtung zum Senden und Empfangen von Daten zum Empfangsteil einer weiteren Einrichtung zum Senden und Empfangen von Daten eines Wagens und vom Sendeteil einer Einrichtung zum Senden und Empfangen von Daten zum Empfangsteil einer Einrichtung zum Senden und Empfangen von Daten eines weiteren zu koppelnden Wagens hergestellt wird, wobei beide Verbindungen gleichzeitig für eine Kopplung bestehen müssen sowie getrennte Sende- und Empfangsantennen an den Einrichtungen zum Senden und Empfangen von Daten an beiden Wagen verwendet werden.

Die HF Verbindung besteht vom Sendeteil des WLAN Accesspoints zum Empfangsteil des WLAN Clients und vom Sendeteil des WLAN Clients zum Empfangsteil des WLAN Accesspoints. Beide Verbindungen müssen gleichzeitig für eine Kopplung bestehen. Üblicherweise werden zum senden um empfangen dieselben Antenne verwendet. Um die paarweise Kopplung zu begünstigen, werden erfindungsgemöß getrennte Sende- und Empfangsantennen an den WLAN Komponenten verwendet. Für die Verbindung ist eine gleichzeitige Kopplung der beiden Sende- um Empfangsantennenpaare notwendig. Das gilt auch für eine Fehlkopplung über Reflexionen. Das gleichzeitige Auftreten der Kopplung über unerwünschte Reflexionen zu WLAN Komponenten auf dem Nachbargleis ist unwahrscheinlicher als bei Verwendung nur eines Antennenpaares für Sende- und Empfangsbetrieb. Somit reduziert sich das Risiko einer Fehlkopplung zum Nachbargleis.

### 3. Paarweise räumliche Ausrichtung der Antennenstrahlrichtung:

In Weiterbildung der Erfindung ist vorgesehen, dass die Datenübertragung zwischen den beiden gekoppelten Zugwagen drahtlos und beim Senden ausgerichtet erfolgt, wobei die Strahlrichtungen räumlich so gewählt werden, dass die gleichzeitige Verbindung nur in einer bestimmten räumlichen Position der paarweise zu koppelnden Zugwagen und deren Einrichtungen zum Senden und Empfangen von Daten besteht.

Die Strahlrichtungen werden räumlich so gewählt, dass die gleichzeitige Verbindung nur in einer bestimmten räumlichen Position der paarweise zu koppelnden WLAN Komponenten besteht. Die Anordnung ist so, dass zu WLAN Komponenten auf dem Nachbargleis eine möglichst schlechte Kopplungssituation entsteht. Die ungünstigste Kopplungssituation für den Wagen auf dem Nachbargleis ist bei auf den Raumdiagonalen zwischen den Wagenenden kreuzweise verlaufenden Hauptstrahlrichtungen der Antennenpaare zu erwarten. Das Risiko einer Kopplung zum Nachbargleis wird dadurch abgesenkt.

### 4. Reflexionsarme Polarisation abgestrahlten elektromagnetischen Wellen:

In Weiterbildung der Erfindung ist vorgesehen, dass zur Absenkung des Kopplungsrisikos zum Nachbargleis eine zirkulare Polarisation bei der Übertragung der hochfrequenten Signale gewählt wird.

Die Reflexionen, die zu einer unerwünschten Kopplung zur WLAN-Komponente auf dem Nachbargleis führen können, sind bei linear horizontaler, linear vertikaler und zirkularer Polarisation unterschiedlich. Zirkulare Polarisation weist in der Praxis verglichen mit linearer Polarisation niedrigere Interferenzmaxima durch konstruktive Überlagerung von reflektierten Strahlungsanteilen auf. Daher wird zur Absenkung des Kopplungsrisikos zum Nachbargleis zirkulare Polarisation gewählt.

### 5. Absenkung von Sendepegel und/oder Empfängerempfindlichkeit:

In Weiterbildung der Erfindung ist vorgesehen, dass die Einrichtungen zum Senden und Empfangen von Daten eine künstlich eingeschränkte Reichweite haben, wozu eine Senkung der Sendeleistung und/oder der Empfängerempfindlichkeit erfolgt.

Üblicherweise strahlen die Sender möglichst stark und die Empfänger sind möglichst empfindlich. In der beschriebenen Situation wird das Risiko einer Fehlkopplung zum Nachbargleis geringer, wenn die WLAN Komponenten eine künstlich eingeschränkte Reichweite haben. Das wird durch Senkung der Sendeleistung und der Empfängerempfindlichkeit erreicht.

Die vorstehend genannte Auslegung der WLAN Physik wird unterstützt durch die im Folgenden genannten logischen Eigenschaften der WLAN Komponenten:

### 1. Begrenzung der Anzahl der verbundenen WLAN Clients pro Access Point:

Eine Eigenschaft von Accesspoints ist die Begrenzung der Anzahl der verbundenen Clients. Dies wird meist dazu verwendet, um eine Lastteilung zwischen mehreren Accesspoints zu erreichen. Für die vorliegende Aufgabe kann diese Eigenschaft genutzt werden, um maximal einen einzigen WLAN Client am Accesspoint zuzulassen. Dadurch wird eine zusätzliche Kopplung zu einer WLAN Komponente auf dem Nachbargleis ausgeschlossen, wenn bereits die gewünschte Kopplung zum richtigen Wagen hergestellt ist.

### 2. Erzwingen der Kopplung des WLAN Clients zum stärksten empfangenen Accesspoint:

In den üblichen mobilen Anwendungen bewegt sich ein Client im Umfeld mehrerer Accesspoints. Mit einem davon ist er verbunden und hält diese Verbindung, auch wenn durch die Bewegung des Clients ein anderer Accesspoint die bessere Verbindungsqualität bieten würde. Ab welcher Signalqualität der Client seinen Accesspoint wechselt, also ein Roaming durchführt, ist einstellbar. Für die vorliegende Aufgabe wird die Roaming Schwelle so eingestellt, dass der Client sofort zum stärksten Accesspoint wechselt. Dadurch wird erreicht, dass ein Client, selbst wenn er fälschlicherweise eine Verbindung zu einem Accesspoint auf dem Nachbargleis aufgebaut haben sollte, schnellstmöglich zum richtigen Accesspoint wechselt.

Die Kombination der dargelegten Einzelmöglichkeiten senkt das Fehlkopplungsrisiko in der Praxis so stark ab, dass die korrekte paarweise bidirektionale Verbindung als sichergestellt betrachtet wird.

Das erfindungsgemäße Verfahren, so wie es vorstehend beschrieben worden ist, wird mit weiteren erfindungswesentlichen Details im Folgenden näher erläutert und anhand der Figuren beschrieben.

In den Figuren 1 bis 8 sind Zugwagen mit den Bezugsziffern 1, 2 und 3 versehen, wobei es sich bei diesen Zugwagen um Passagier- oder Güterwagen (siehe beispielsweise Figuren 1 und 2, Bezugsziffern 1 bis 3) oder aber auch um eine Lokomotive (siehe beispielsweise Figuren 3 und 4, Bezugsziffer 1) handeln kann.

In den Figuren 5 bis 8 sind die entsprechenden Zugwagen gezeigt, der besseren Übersichtlichkeit wegen allerdings nicht mit Bezugsziffern versehen.

Grundsätzliche Voraussetzung ist, dass in jedem Zugwagen 1 bis 3 ein Empfänger E1 bis E3 mit zugehöriger Antenne sowie ein Sender S1 bis S3, ebenfalls mit zugehöriger Antenne, vorhanden ist.

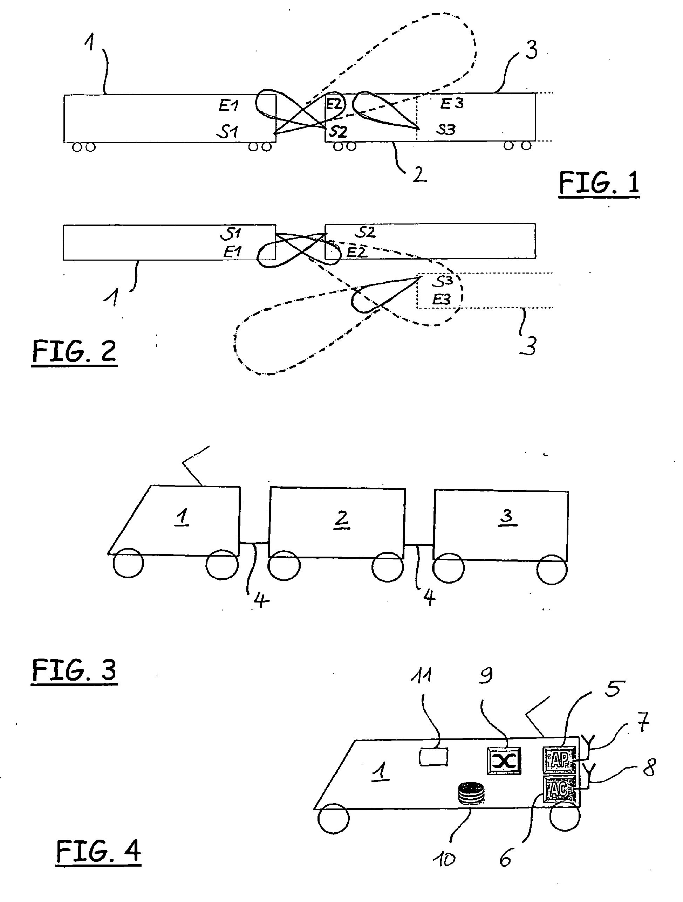

In der Figur 1 ist eine Seitenansicht von drei Zugwagen 1 bis 3 gezeigt, wobei der Sender S1 des Wagens 1 von hinten unten links nach vorne oben rechts abstrahlt. Dies ist durch die entsprechende Keule gekennzeichnet. Ebenso strahlt der Sender S2 des Wagens 2 von hinten unten rechts nach vorne oben links. Auch dies ist durch die entsprechende Keule der Abstrahlcharakteristik dargestellt.

Die gleiche Situation wie in Figur 1 ist in Figur 2 noch einmal dargestellt, wobei jetzt eine Draufsicht auf die Zugwagen 1 bis 3 zu erkennen ist. Hierbei ist wesentlich, dass die Wagen 1 und 2 auf ein und demselben Gleis stehen, wobei der Zugwagen 3 auf einem Nachbargleis steht. Folglich sollen die Zugwagen 1 und 2 über Funk zwecks Datenübertragung miteinander verbunden werden, um kommunizieren zu können. Der Zugwagen 3 soll allerdings nicht mit den beiden anderen Zugwagen 1 und 2 kommunizieren können. Infolgedessen wird die Wirkung der erfindungsgemäßen räumlich ausgerichteten, hier diagonalen Antennenorientierung erkennbar. Bei dem Zugwagen 1 ist die Kopplung der Sendeantenne S1 zu der Empfangsantenne E2 des Zugwagens 2 aufgrund der Ausrichtung und der Beschränkung der Sendeleistung optimal. Die Beschränkung der Sendeleistung des Senders S1 wird dadurch deutlich, dass die Abstrahlcharakteristik ohne eine Begrenzung der Sendeleistung zu der gestrichelt gezeichneten Abstrahlkeule führen würde. Ohne diese Begrenzung wäre es möglich, dass der Sender S1 des Zugwagens Nummer 1 mit dem Empfänger des Zugwagens 3 auf dem Nachbargleis kommunizieren könnte, was er aber nicht soll. Ebenso ist die räumlich diagonale Antennenorientierung und die entsprechende Beschränkung der Sendeleistung des Senders S2 im Zugwagen 2 vorhanden, so dass aufgrund dieser Situation, wie sie in den Figuren 1 und 2 dargestellt ist, infolge der ausgerichteten Abstrahlcharakteristik und der Beschränkung der Sendeleistung eine Verbindung zwischen den Zugwagen 1 und 2, wie gewünscht, vorhanden. Gleichzeitig ist entsprechend der Darstellung in Figur 2 erkennbar, dass eine Kommunikation mit dem Sender S3 beziehungsweise dem Empfänger E3 des Zugwagens 3 nicht möglich ist, weil er den Sender S1 zu schwach empfängt und sein eigener Sender S3 außerdem eine räumlich diagonal von dem Zugwagen 1 weggerichtete Abstrahlcharakteristik aufweist. Ebenfalls ist wichtig, dass die Ausrichtung der Abstrahlcharakteristik der Sender S1 und S2 nach oben gewählt ist (folglich sind die Sender S1 und S2 auch im unteren Bereich der Wagen 1 und 2 angeordnet), weil dort am wenigsten reflektierende Metallteile vorhanden sind.

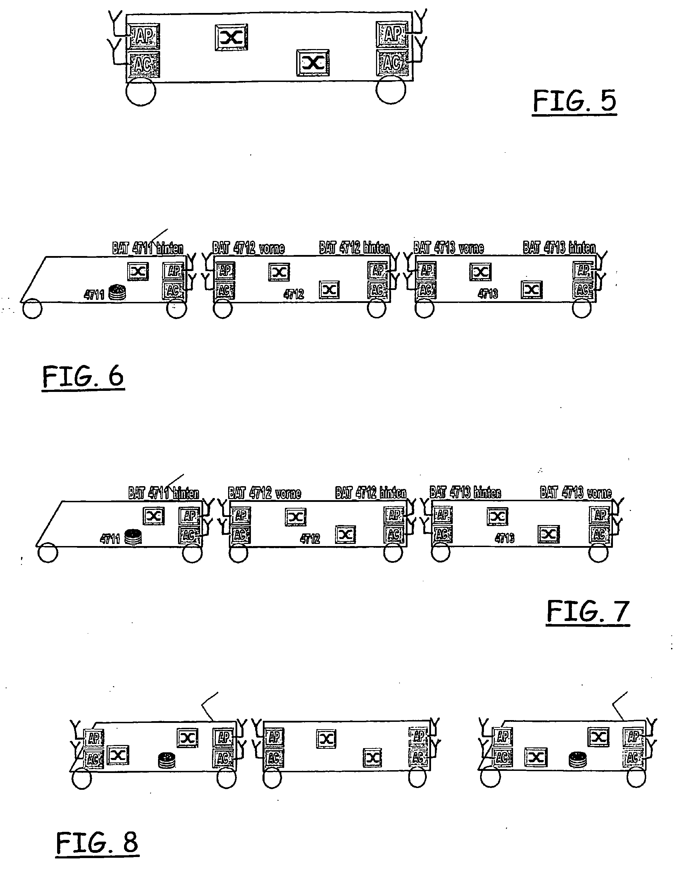

Figur 3 zeigt schematisch eine Kopplung der Zugwagen 1 (Lokomotive) und 2, 3 (angehängte Passagierwagen beispielsweise) über mechanische Kupplungen 4. Dieser Aufbau einer Zugwagenkopplung liegt auch den Ausführungsbeispielen gemäß den Figuren 5 bis 8 zugrunde.

Figur 4 zeigt die Ausrüstung der Lokomotive 1 mit den entsprechenden Einrichtungen zum Senden, Empfangen und Verarbeiten von Daten. Bei diesen Einrichtungen handelt es sich um zumindest einen W-Lan-Accesspoint 5, zumindest einen W-Lan-Client 6, wobei diese mit entsprechenden Sende- und Empfangsantennen 7, 8 versehen sind. Weiterhin ist eine Einrichtung 9 zum Verarbeiten von Daten, eine Speichereinheit 10 und eine Anzeigeeinheit 11 vorhanden. Innerhalb der Lokomotive 1 sind die Einheiten 5, 6 und 9 bis 11 untereinander elektrisch (zum Beispiel über einen Ethernetbus) miteinander verbunden. Soll zum Beispiel von der Lokomotive 1 aus in den gekoppelten Zugwagen 2, 3 eine Information angezeigt werden, kann in der Lokomotive 1 auch eine hier nicht dargestellte Eingabeeinheit vorhanden sein.

Figur 5 zeigt beispielhaft die Ausrüstung eines Zugwagens 2, wobei auch hier, wie ebenfalls in den Figuren 6 bis 8, die in der Figur 4 gezeigten Einrichtungen zum Senden, Empfangen und Verarbeiten von Daten vorhanden sind. Während bei der Lokomotive 1 gemäß Figur 4 an deren einen Ende die Antennen 7, 8 und die zugehörigen W-Lan-Komponenten 5, 6 vorhanden sind, sind bei dem Zugwagen 2 gemäß Figur 5 an seinen beiden stirnseitigen Enden die entsprechenden Komponenten vorhanden. Auch in dem Zugwagen 2 gemäß Figur 5 können Speichereinheiten 10, Anzeigeeinheiten 11 sowie Eingabeeinheiten vorhanden sein.

Obwohl in den Figuren immer nur eine Lokomotive 1 und 2 Zugwagen 2, 3 dargestellt ist, versteht es sich von selbst, dass eine beliebige Anzahl von Zugwagen 2, 3 vorhanden sein kann, wobei an derart zusammengekoppelten Zugwagen nur an dem einen Ende oder an beiden Enden jeweils eine Lokomotive 1 gekoppelt sein kann.

Im Folgenden wird das erfindungsgemäße Verfahren anhand der Figuren weiter im Detail beschrieben.

In Zügen werden Informationssysteme auf Ethernetbasis gewünscht. Ziel ist insbesondere die Information von Passagieren und die nicht sicherheitsrelevante Datenübertragungen für den Zugbetrieb. Hierzu gehören beispielsweise Fahrgastinformationen über den nächsten Halt, die Angabe der Ausstiegstüren, Sitzreservierungsanzeigen, Werbungseinblendungen auf Bildschirmen, aber auch Informationen für den Zugführer, z.B. Reihungsbestimmung der Wagen oder Videosignale aus den Wagen. Das Zugnetzwerk erstreckt sich über den gesamten Zug. Das Netzwerk ist selbstkonfigurierend, d.h. bei der Zusammenstellung der einzelnen Wagen erweitert sich das Netzwerk und reduziert sich bei der Abtrennung von Wagen. Die Verbindungen zwischen den Wagen sind ausschließlich drahtlos ausgeführt. Für die drahtlose Kommunikation sind vorzugsweise standardkonforme WLAN Komponenten zu verwenden. Die Netzkonfiguration erfolgt vollautomatisch. Einbeziehungen von nicht zum Zug gehörenden Wagen sind auch temporär nicht zulässig. Die Lokomotive (siehe Figur 3) ist die zentrale Komponente des Zuges. Hier befindet sich der Leitrechner, auf dem alle Applikationen laufen. In der Lokomotive befinden sich als aktive Netzkomponenten ein Ethernet Switch für die lokinterne Kommunikation und die WLAN Komponenten zur Kommunikation mit dem nächsten Wagen. Alle Lokomotiven sind vorzugsweise gleich ausgestattet. Jede Lokomotive hat eine eindeutige Nummer. Diese Nummer ist Bestandteil der Systemnamen aller Switche und Wireless Komponenten in dieser Lokomotive. Die Namen werden bei Installation zugewiesen. Alle Wagen (siehe Figur 5) sind vorzugsweise ebenfalls gleich ausgestattet. Im Wagen befinden sich als aktive Netzkomponenten zwei Ethernet Switche für die wageninterne Kommunikation und an jedem Wagenende sind WLAN Komponenten zur Kommunikation mit dem benachbarten Wagen oder der benachbarten Lokomotive. Jeder Wagen hat eine eindeutige, zugunabhängige Wagennummer. Diese Nummer ist Bestandteil der Systemnamen aller Switche und Wireless Komponenten in diesem Wagen. Die Namen werden bei Installation zugewiesen. Alle Wireless Komponenten haben eine einheitliche SSID, ein einheitliches WPA Passwort und eine einheitliche Kanaleinstellung. Mit der Zuweisung der Namen zu den Accesspoints wird zur Wagenrichtungsfestlegung festgelegt, welches Wagenende "vorn" und welches "hinten" ist. Der vorne befindliche Accesspoint erhält beispielsweise den Namenszusatz "_vorn_". Hieraus kann die Leitstation in der Lokomotive die Orientierung des gekoppelten Wagens erkennen. Alle Accesspoints haben eine Stationsliste mit unzulässigen Verbindungspartnern. Innerhalb des Wagens werden wechselseitig alle vorhandenen WLAN Komponenten in die jeweiligen Sperrlisten eingetragen. Damit wird verhindert, dass innerhalb des Wagens unerwünschte drahtlose Verbindungen aufgebaut werden.

Für die Wagenkopplung sind folgende Randbedingungen einzuhalten:
- Keine Nutzungsmöglichkeit der sonstigen Datenverbindungen zwischen den Wagen, insbesondere darf das UIC Kabel nicht genutzt werden.
- A priori keine Information auf dem Leitrechner der Lokomotive über die zu koppelnden Wagennummern des Zuges,
- Simultaner Koppelvorgang eines weiteren Zuges auf dem benachbarten Gleis.

Unter den genannten Voraussetzungen sind nirgendwo Kenntnisse über die Nummern der zu koppelnden Nachbarwagen vorhanden. Das bedeutet, dass die WLAN Komponenten selbstständig die Verbindung zum benachbarten Wagen aufbauen müssen. Fehlverbindungen zu WLAN Komponenten anderer Wagen müssen mit hoher Wahrscheinlichkeit ausgeschlossen werden können. Das Ergebnis des Koppelvorgangs ist eine Paarung der WLAN Komponenten zweier benachbarter Wagenenden. Hochfrequenztechnisch muss die Antennenanlage so ausgelegt sein, dass Kopplungen zum Nachbargleis unwahrscheinlich werden.

Folgende Antennenparameter stehen zur Verfügung:
- Richtcharakteristik: Eine Antenne mit geringem Öffnungswinkel und geringen Nebenkeulen ist erforderlich. Damit entsteht ein hoher Feldstärkeunterschied zu Wagen auf dem Nachbargleis.
- Polarisation: Zirkulare Polarisation führt bei Mehrwegeempfang, d.h. Reflexionen an Metallteilen der Wagen zu weniger stark ausgeprägten Interferenzen. Damit sinkt das Risiko, dass durch konstruktive Wellenüberlagerung Feldstärkemaxima von WLAN Komponenten des Nachbargleises entstehen.

Zusätzlich gibt es mechanische Möglichkeiten:
- Anzahl der Antennen: Für jedes Acesspoint/Client Paar ist genau ein Antennenpaar notwendig.
- Orte der Antennen: Im Innern der Wagen mit Strahlungsgang durch die Kunststoffaußenhaut des Wagens.
- Orientierung der Hauptkeule: Schräg nach oben bzw. unten. Damit wird bei möglichen Gleiskurven eine höhere Dämpfung zum Nachbargleis erreicht als mit in Gleisachse strahlenden Antennen.

Die genannten Freiheitsgrade müssen so genutzt werden, dass der resultierende Dämpfungsunterschied zwischen den beiden zu paarenden Wagenenden und einem gleichartigen Wagenende auf dem Nebengleis maximal wird.

An die beschriebene Antennenanlage sind die HF-Teile der BATs angeschlossen. Diese bieten weitere Möglichkeiten um das Risiko einer Fehlkopplung zum Nachbargleis zu senken:
- Frequenzbereich: Grundsätzlich stehen die Frequenzbereiche 2,4 GHz und 5 GHz zur Verfügung. Während des Kopplungsvorgangs wird 5GHz verwendet, denn dort ist die Freiraumdämpfung höher und damit sinkt das Risiko einer Fehlkopplung.
- Signalstärkeinformation: Die Signalstärke der Gegenstation ist bekannt. Hier kann ein Schwellwert eingestellt werden, der nur eine Kopplung zur stärksten Gegenstation erlaubt.
- Die Anzahl der an einen Accesspoint gekoppelten Clients kann begrenzt werden. Der Wert wird so eingestellt, dass nur ein Client pro Accesspoint zulässig ist.
- Ausgangspegel: Der Sendepegel wird niedrig eingestellt. Dadurch reduziert sich der Bereich, in dem eine WLAN Verbindung aufgebaut werden kann.
- Da jeder Empfangsantenne nur genau eine einzige Sendeantenne zugeordnet werden soll darf die in den BAT vorhandene Antennendiversity Funktion nicht verwendet werden.
- Da mit jedem Client mehrere Ethernet Geräte verbunden sind muss er im Client Bridge Mode betreiben werden.

Bei Annäherung der zu koppelnden Wagen verbinden sich die jeweiligen Clients mit den Accesspoints des gegenüberliegenden Wagens. Dies geschieht selbstständig ohne Anstoß einer anderen Komponente des Wagens. Die Topologieerkennung des Netzes geschieht auf der Leitstation der Lokomotive. Hier ist eine geeignete Software installiert, die mit Hilfe des genormten Link Layer Description Protokolls die Struktur des Netzes erkennt. Da jeder Wagennummer sich in den Systemnamen der dort befindlichen Switche befindet kennt die Leitstation die mit ihr verbundenen Wagen. In dem Beispiel der Figur 6 ist der Leitstation bekannt, dass Komponenten mit den Namensbestandteilen 4711, 4712 und 4713 im Netz vorhanden sind. Damit sind die gekoppelten Wagen identifiziert. Bei der Installation der Wageninfrastruktur wurde ein Wagenende als "vorne" und das andere als "hinten" definiert und die Accesspoints entsprechend benannt. Im oben gezeichneten Beispiel wird über LLDP erkannt, dass das der Leitstation bekannte Ende der Lok (BAT_4711_hinten) mit den nächsten Wagen an dessen Vorderseite (BAT_4712_vorne" logisch verbunden ist. Ebenso ist die nächste Kopplung zu Wagen 4713 als "hinten" zu "vorne" bekannt. Somit kennt die Leitstation die Wagenorientierung und kann z.B. die in Fahrtrichtung links liegenden Türen identifizieren. Ist beispielsweise der letzte Wagen gegenüber der vorigen Situation gedreht ergibt sich die in Figur 7 erkennbare Kopplungstruktur. Über LLDP wird erkannt, dass BAT_4712_hinten" mit "BAT_4713_hinten" gekoppelt ist. Die Leitstation muss dann die fahrtrichtungsabhängigen Informationen dieses Wagens entsprechend spiegeln. So wird erreicht, dass Aktionen seitenrichtig ausgeführt werden obwohl der Wagen gedreht ist. Für das beschriebene Netzwerk gelten Verfügbarkeitsanforderungen wie bei vollständig drahtgebundenen Netzen. Deshalb ist die Struktur so ausgelegt, dass über Spanning Tree oder Hiperring die hohe geforderte Datentransportsicherheit erreicht wird. Abtrennung von Wagen aus dem Zug erfolgt durch Wegfahren. Dann bricht die WLAN Verbindung automatisch ab. Die Topologieerkennung bemerkt das Fehlen des Wagens und aktualisiert die Zugkonfiguration. Mit der erfindungsgemäßen Lösung werden die geforderten Aufgaben
- Verbinden der Einzelwagen in einem Zug für Kommunikation,
- Erkennung der Reihung der Wagen im Zug und
- Erkennung der Wagen im Zug
gelöst.

Die Aufgabe besteht ausserdem darin, das Netzwerk auf einen Zugverbund bestehend aus mindestens zwei Stammpendeln auszudehnen. Im Endeffekt handelt es sich kommunikationstechnisch um mehrere Standardzüge, die zusammengeführt werden sollen. Hierzu ist in der Lokomotive auch am vorderen Ende eine WLAN Einheit notwendig (siehe Figur 8). Durch die Anforderung Zugkopplung unterscheidet sich eine Lokomotive nur noch durch den dort vorhandenen Leitrechner von einem Wagen. Insofern gelten die in Kapitel 5 dargelegten Kopplungsmechanismen auch für Stammpendel oder Zugverbünde. Die Antennenkonfiguration und die WLAN Komponenten sind optimiert für minimales Fehlkopplungsrisiko. Das hat zur Folge, dass sich die Verbindung zwischen den Stammpendeln erst aufbaut, wenn sie dicht angenähert sind. Ein manueller Eingriff ist nicht erforderlich. Das bedeutet beide Kommunikationsnetze verschmelzen zu einem. Durch die eindeutige Zuordnung von Systemnamen zu eindeutigen Wagen- und Loknummern sind keine Namens- oder sonstige Konflikte zu erwarten. Das verbunden Netz zerfällt erst in unabhängige Teilnetze, wenn sich die Stammpendel von einander entfernt haben. Alternativ können die WLAN Komponenten an der Verbindungsstelle deaktiviert werden. Dies kann zum Beispiel vom bis zur Trennung passiven Leitstand ausgelöst werden, da dieser ja nach der Trennung aktiv werden muss.

In jeder am Stammpendelverbund befindlichen Lokomotive befindet sich ein aktiver Leitrechner. Bezüglich der Netzverschmelzung und Netztopologie verursacht das keine Konflikte.

Mit der erfindungsgemäßen Lösung werden die geforderten Aufgaben
- Kommunikation zwischen zwei Pendeln währen der Fahrt und
- Kommunikation zwischen den Pendeln auch wenn diesen noch nicht verbunden sind
gelöst. Im unverbundenen Zustand kann über kurze Distanz kommuniziert werden.

Die Aufgabe besteht weiterhin darin, Traktionsbefehle über die WLAN Verbindungen zu schicken um die Stammpendel zusammenzuführen. Traktionsbefehle über die WLAN Strecke zu führen erfordert eine entsprechende SIL Klassifikation. Da die WLAN Komponenten nicht klassifiziert sind, können keine sicherheitsgerichteten Funktionen über die WLAN Strecken realisiert werden.

| Begriff | Bedeutung |
|---|---|
| WLAN | Drahtloses lokales Netzwerk |
| ACA | Autokonfigurationsadapter |
| UIC Kabel | Drahtgebundene Verbindung durch den ganzen Zug |
| LLDP | Link Layer Description Protocol |
| SIL | Safety Integrity Level. |

## Patentansprüche

1. Verfahren zur Kopplung von zwei Zugwagen untereinander zwecks Datenaustausch zwischen diesen beiden Zugwagen, wobei in jedem der beiden Zugwagen Einrichtungen zum Senden und Empfangen sowie zum Verarbeiten von Daten vorhanden sind, **dadurch gekennzeichnet, dass** die Datenübertragung zwischen den stirnseitigen Enden der beiden gekoppelten Zugwagen drahtlos und beim Senden ausgerichtet erfolgt, wobei die Strahirichtungen beim Senden räumlich so nach oben gewählt werden, dass die gleichzeitige Verbindung nur in einer bestimmten räumlichen Position der paarweise zu koppelnden Zugwagen und deren im unteren Bereich der Zugwagen angeordneten Einrichtungen zum Senden und deren im oberen Bereich der Zugwagen angeordneten Einrichtungen zum Empfangen von Daten besteht.

2. Verfahren nach Anspruch 1, **dadurch gekennzeichnet, dass** die Datenübertragung in zumindest zwei Frequenzbereichen erfolgt, wobei bei einem Kopplungsvorgang zweier Zugwagen durch einen Wechsel des Frequenzbereiches bestätigt werden kann, ob sich bei den zumindest beiden Frequenzbereichen dieselbe Paarung der verwendeten Zugwagen ergibt.

3. Verfahren nach Anspruch 1 oder 2, **dadurch gekennzeichnet, dass** eine Verbindung vom Sendeteil einer Einrichtung zum Senden und Empfangen von Daten zum Empfangsteil einer weiteren Einrichtung zum Senden und Empfangen von Daten eines Wagens und vom Sendeteil einer Einrichtung zum Senden und Empfangen von Daten zum Empfangsteil einer Einrichtung zum Senden und Empfangen von Daten eines weiteren zu koppelnden Wagens hergestellt wird, wobei beide Verbindungen gleichzeitig für eine Kopplung bestehen müssen sowie getrennte Sende- und Empfangsantennen an den Einrichtungen zum Senden und Empfangen von Daten an beiden Wagen verwendet werden.

4. Verfahren nach Anspruch 1, 2 oder 3, **dadurch gekennzeichnet, dass** zur Absenkung des Kopplungsrisikos zum Nachbargleis eine zirkulare Polarisation bei der Übertragung der hochfrequenten Signale gewählt wird.

5. Verfahren nach Anspruch 1, 2, 3 oder 4, **dadurch gekennzeichnet, dass** die Einrichtungen zum Senden und Empfangen von Daten eine künstlich eingeschränkte Reichweite haben, wozu eine Senkung der Sendeleistung und/oder der Empfängerempfindlichkeit erfolgt.

6. Verfahren nach einem der vorhergehenden Ansprüche, **dadurch gekennzeichnet, dass** als Einrichtungen zum Senden und Empfangen von Daten WLAN Komponenten wie WLAN Accesspoints als Empfänger/Sender und WLAN Clients als zugehörige Sender/Empfänger (oder umgekehrt) eingesetzt werden.

7. Verfahren nach Anspruch 6, **dadurch gekennzeichnet, dass** die Anzahl der mit einem WLAN Accesspoint verbundenen Clients begrenzt wird, um eine Lastteilung zwischen mehreren WLAN Accesspoints zu erreichen.

8. Verfahren nach Anspruch 6 oder 7, **dadurch gekennzeichnet, dass** die Kopplung des WLAN Clients zum stärksten empfangenen WLAN Accesspoint **dadurch** erzwungen wird, dass eine Schwelle so eingestellt, dass der WLAN Client sofort zum stärksten WLAN Accesspoint wechselt.

9. Verfahren nach einem der vorhergehenden Ansprüche, **gekennzeichnet durch** die Kombination zumindest zweier oder mehrerer der vorhergehenden Patentansprüche.

## Claims

1. Method for coupling two train cars to one another for the purpose of the exchange of data between these two train cars, wherein devices for transmitting and receiving as well as processing data are present in each of the two train cars, **characterized in that** the data is transmitted between the front-side ends of the two coupled train cars in a wireless fashion and in an oriented fashion during transmission, wherein the beam directions during transmission are spatially selected in the upward direction in such a way that the simultaneous connection occurs only in a specific spatial position of the train cars which are to be coupled in pairs and of their transmitting devices arranged in the lower region of the train cars and of their data-receiving devices arranged in the upper region of the train cars.

2. Method according to Claim 1, **characterized in that** the data is transmitted in at least two frequency ranges, wherein during a process of coupling two train cars it is possible to confirm, by changing the frequency range, whether the same pairing of the train cars which are used occurs in the at least two frequency ranges.

3. Method according to Claim 1 or 2, **characterized in that** a connection is produced from the transmitting part of a device for transmitting and receiving data to the receiving part of a further device for transmitting and receiving data of a car and from the transmitting part of a device for transmitting and receiving data to the receiving part of a device for transmitting and receiving data of a further car to be coupled, wherein the two connections must be present simultaneously for one coupling, and separate transmitting and receiving antennas on the devices are used for transmitting and receiving data on the two cars.

4. Method according to Claim 1, 2 or 3, **characterized in that** in order to reduce the coupling risk with respect to the adjacent track a circular polarization is selected for the transmission of the radio frequency signals.

5. Method according to Claim 1, 2, 3 or 4, **characterized in that** the devices for transmitting and receiving data have an artificially limited range, for which purpose the transmitting power and/or the receiver sensitivity are is lowered.

6. Method according to one of the preceding claims, **characterized in that** WLAN components such as WLAN access points as receivers/transmitters and WLAN clients as associated transmitters/receivers (or vice versa) are used as devices for transmitting and receiving data.

7. Method according to Claim 6, **characterized in that** the number of clients connected to a WLAN access point is limited in order to achieve load distribution between a plurality of WLAN access points.

8. Method according to Claim 6 or 7, **characterized in that** the coupling of the WLAN client to the strongest received WLAN access point is forcibly brought about by virtue of the fact that a threshold is set such that the WLAN client changes immediately to the strongest WLAN access point.

9. Method according to one of the preceding claims, **characterized by** the combination of at least two or more of the preceding patent claims.

## Revendications

1. Procédé destiné au couplage de deux voitures l'une en dessous de l'autre à des fins d'échange de données entre ces deux voitures, dans lequel, dans chacune des deux voitures, se trouvent des dispositifs destinés à émettre et à recevoir ainsi qu'à prétraiter des données, **caractérisé en ce que** la transmission de données entre des extrémités avant des deux voitures couplées s'effectue sans fil et de manière orientée lors de l'émission, et dans lequel les directions des faisceaux lors de l'émission sont sélectionnées spatialement vers le haut de telle manière que la connexion simultanée ne soit établie qu'à une position spatiale déterminée des voitures devant être couplées par paires, les dispositifs disposés dans la partie inférieure des voitures étant destinés à l'émission de données et les dispositifs disposés dans la partie supérieure des voitures étant destinés à la réception de données.

2. Procédé selon la revendication 1, **caractérisé en ce que** la transmission de données s'effectue dans au moins deux gammes de fréquences, dans lequel, lors d'un processus de couplage de deux voitures, il est possible de confirmer par un changement de la gamme de fréquences s'il se produit le même appariement des voitures utilisées dans les au moins deux gammes de fréquences.

3. Procédé selon la revendication 1 ou 2, **caractérisé en ce qu'**une connexion d'une partie émettrice d'un dispositif destiné à l'émission et à la réception de données à la partie réceptrice d'un autre dispositif destiné à l'émission et à la réception de données d'une voiture et **en ce qu'**une connexion d'une partie émettrice d'un dispositif destiné à l'émission et à la réception de données à la partie réceptrice destinée à l'émission et à la réception de données d'une autre voiture à coupler sont établies, les deux connexions devant être présentes simultanément et des antennes d'émission et de réception séparées étant utilisées sur les dispositifs destinés à l'émission et à la réception de données sur les deux voitures.

4. Procédé selon la revendication 1, 2 ou 3, **caractérisé en ce que**, pour diminuer le risque de couplage à la voie voisine, on sélectionne une polarisation circulaire lors de la transmission des signaux à haute fréquence.

5. Procédé selon la revendication 1, 2, 3 ou 4, **caractérisé en ce que** les dispositifs destinés à l'émission et à la réception de données présentent une largeur de bande limitée artificiellement afin qu'il en résulte une diminution de la puissance d'émission et/ou de la sensibilité de réception.

6. Procédé selon l'une quelconque des revendications précédentes, **caractérisé en ce qu'**on utilise en tant que dispositifs destinés à l'émission et à la réception de données des composants de réseaux locaux sans fil (WLAN) tels que des points d'accès WLAN en tant que récepteur/émetteur et des clients WLAN en tant qu'émetteur/récepteur correspondants (ou inversement).

7. Procédé selon la revendication 6, **caractérisé en ce que** le nombre des clients connectés à un point d'accès WLAN est limité de manière à obtenir une répartition de charge entre plusieurs points d'accès WLAN.

8. Procédé selon la revendication 6 ou 7, **caractérisé en ce que** le couplage du client WLAN est effectué au point d'accès WLAN reçu de la manière la plus intense, de manière à fixer un seuil tel que le client WLAN bascule immédiatement sur le point d'accès WLAN le plus intense.

9. Procédé selon l'une quelconque des revendications précédentes, **caractérisé par** la combinaison d'au moins deux ou plusieurs des revendications précédentes.
